(19) **Europäisches Patentamt / European Patent Office / Office européen des brevets**

(11) **EP 4 421 926 A1**

(12) # EUROPEAN PATENT APPLICATION
published in accordance with Art. 153(4) EPC

(43) Date of publication:
**28.08.2024 Bulletin 2024/35**

(21) Application number: **22898889.5**

(22) Date of filing: **03.11.2022**

(51) International Patent Classification (IPC):
$H01M\ 8/1048^{(2016.01)}$    $H01M\ 8/1039^{(2016.01)}$
$H01M\ 8/1058^{(2016.01)}$    $H01B\ 1/12^{(2006.01)}$
$H01M\ 8/1004^{(2016.01)}$    $H01M\ 8/10^{(2016.01)}$

(52) Cooperative Patent Classification (CPC):
H01B 1/12; H01M 8/10; H01M 8/1004;
H01M 8/1039; H01M 8/1048; H01M 8/1058;
Y02E 60/50

(86) International application number:
**PCT/KR2022/017136**

(87) International publication number:
**WO 2023/096207 (01.06.2023 Gazette 2023/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.11.2021 KR 20210166092**

(71) Applicant: **Kolon Industries, Inc.**
**Seoul 07793 (KR)**

(72) Inventors:
• **PARK, Jung Hwa**
  **Seoul 07793 (KR)**
• **LEE, Dong Hoon**
  **Seoul 07793 (KR)**
• **LEE, Eun Su**
  **Seoul 07793 (KR)**
• **LEE, Hye Song**
  **Seoul 07793 (KR)**

(74) Representative: **Ter Meer Steinmeister & Partner Patentanwälte mbB**
**Nymphenburger Straße 4**
**80335 München (DE)**

(54) **ION CONDUCTOR COMPOSITION, POLYMER ELECTROLYTE MEMBRANE INCLUDING SAME, MEMBRANE-ELECTRODE ASSEMBLY, AND FUEL CELL**

(57) Provided is an ion conductor composition for improving the ion conductivity of a polymer electrolyte membrane under low humidity/high temperature conditions. The ion conductor composition according to the present disclosure includes 100 parts by weight of an ion conductor and 0.05 to 10 parts by weight of a sugar compound on the basis of 100 parts by weight of the ion conductor.

**FIG.1**

**Description**

**[TECHNICAL FIELD]**

The present disclosure relates to an ion conductor composition, a polymer electrolyte membrane including the same, a membrane-electrode assembly, and a fuel cell, and relates to an ion conductor composition, which improves ion conductivity performance by increasing the activity of an electrolyte membrane by maintaining a water content in the polymer electrolyte membrane, through an ion conductor composition containing a saccharide compound having a functional group capable of interacting with water, under a high temperature or low humidity condition, a polymer electrolyte membrane including the same, a membrane-electrode assembly, and a fuel cell.

**[BACKGROUND ART]**

A fuel cell is a battery equipped with a power generation system that directly converts chemical reaction energy, such as an oxidation/reduction reaction of hydrogen and oxygen contained in hydrocarbon-based fuel materials (e.g., methanol, ethanol, and natural gas), into electrical energy. Due to the characteristics of high energy efficiency and environment-friendly with low emissions of pollutants, the fuel cell is attracting attention as a next-generation clean energy source that can replace fossil energy.

Such a fuel cell has an advantage in that it can generate a wide range of outputs in a stack configuration by stacking unit cells, and has been highlighted as a small and mobile portable power source because it shows an energy density 4 to 10 times higher than that of a small lithium battery.

A stack that substantially generates electricity in a fuel cell is a stack of several to dozens of unit cells consisting of a membrane-electrode assembly (MEA) and a separator (also called a bipolar plate), and the membrane-electrode assembly generally has a structure in which an anode (or a fuel electrode) and a cathode electrode (a cathode, or an air electrode) are respectively formed on both sides with the electrolyte membrane disposed therebetween.

Fuel cells can be classified into alkaline electrolyte membrane fuel cells, polymer electrolyte membrane fuel cells (PEMFC), etc. according to the state and type of electrolyte, and among them, the polymer electrolyte membrane fuel cells, due to advantages, such as a low operating temperature of below 100°C, fast start-up and response characteristics, excellent durability, etc., has been highlighted as a portable power supply and power supplies for vehicles and home.

Representative examples of the polymer electrolyte membrane fuel cells include a proton exchange membrane fuel cell (PEMFC) that uses hydrogen gas as fuel, a direct methanol fuel cell (DMFC) that uses liquid methanol as fuel, etc.

Summarizing the reactions occurring in the polymer electrolyte membrane fuel cell, first, when a fuel such as hydrogen gas is supplied to the anode electrode, hydrogen ions (H+) and electrons (e-) are generated by the oxidation reaction of the hydrogen gas at the anode electrode. The hydrogen ions generated are transferred to the cathode electrode through the polymer electrolyte membrane, and the electrons generated are transferred to the cathode electrode through an external circuit. Oxygen gas is supplied from the cathode electrode, and oxygen is combined with hydrogen ions and electrons to generate water by a reduction reaction of oxygen.

Meanwhile, in order to realize the commercialization of polymer electrolyte membrane fuel cells, there are still many technical barriers to solve, and essential factors to improve are realization of high performance, long lifetime, and low price. The component that has the highest influence in this matter is a membrane-electrode assembly, and among them, a polymer electrolyte membrane is one of the key elements that affects most on the performance and price of the MEA.

Requirements for the polymer electrolyte membrane necessary for the operation of the polymer electrolyte membrane fuel cell include high hydrogen ion conductivity, chemical stability, low fuel permeability, high mechanical strength, a low water content, excellent dimensional stability, *etc*. There is a tendency for conventional polymer electrolyte membranes that it is difficult to normally exhibit high performance in a specific temperature and relative humidity environment, particularly under a high temperature or low humidity condition. Therefore, the polymer electrolyte membrane fuel cell to which the conventional polymer electrolyte membrane is applied is limited in its scope of use.

In particular, in order to overcome the difficulty of exhibiting high performance of a polymer electrolyte membrane under a high temperature or low humidity condition, studies have been continuously conducted on the improvement of an ion conductivity of a polymer electrolyte membrane by introducing a moisture-containing material into the polymer electrolyte membrane.

**[DETAILED DESCRIPTION OF INVENTION]**

**[TECHNICAL PROBLEMS]**

An object of the present disclosure is to provide an ion conductor composition, which improves ion conductivity performance by increasing the activity of a polymer electrolyte membrane by maintaining a water content in the polymer electrolyte membrane, through an ion conductor composition containing a saccharide compound having a functional group capable of interacting with water (or hydrogen bonding), under a low humidity or high temperature condition.

Another object of the present disclosure is to provide a polymer electrolyte membrane including the ion conductor composition.

Still another object of the present disclosure is to provide a membrane-electrode assembly, which improves the ionic conductivity of a polymer electrolyte membrane while minimizing the problem caused by an interface difference (difference in swelling degree) between the polymer electrolyte membrane made of an ion conductor composition containing a saccharide compound and a catalyst layer having a relatively low water content.

Still another object of the present disclosure is to provide a fuel cell including the membrane-electrode assembly.

The objects of the present disclosure are not limited to the above-mentioned objects, and other objects and advantages of the present disclosure not mentioned above can be understood by the following description and will be more clearly understood by the examples of the present disclosure. Additionally, it will also be readily apparent that the objects and advantages of the present disclosure may be realized by means of the means and combinations thereof indicated in the claims.

**[TECHNICAL SOLUTION]**

In order to achieve the above objects, in an embodiment, the present disclosure provides an ion conductor composition which includes 100 parts by weight of an ion conductor; and 0.05 to 10 parts by weight of a saccharide compound based on 100 parts by weight of the ion conductor.

In order to achieve the above objects, in another embodiment, the present disclosure may provide a polymer electrolyte membrane including the ion conductor composition.

In order to achieve the above objects, in still another embodiment, the present disclosure may provide a membrane-electrode assembly, which includes the polymer electrolyte membrane; and a catalyst layer disposed on at least one surface of the polymer electrolyte membrane.

In order to achieve the above objects, in still another embodiment, the present disclosure may provide a fuel cell including the membrane-electrode assembly.

**[EFFECT OF INVENTION]**

According to an aspect of the present disclosure, it is possible to provide an ion conductor composition which improves ion conductivity performance by increasing the activity of a polymer electrolyte membrane by maintaining a water content in the polymer electrolyte membrane, through an ion conductor composition containing a saccharide compound having a functional group capable of interacting with water (or hydrogen bonding), under a low humidity or high temperature condition.

According to another aspect of the present disclosure, it is possible to provide a polymer electrolyte membrane including the ion conductor composition.

According to still another aspect of the present disclosure, it is possible to provide a membrane-electrode assembly, which improves the ionic conductivity of a polymer electrolyte membrane while minimizing the problem caused by an interface difference (difference in swelling degree) between the polymer electrolyte membrane made of an ion conductor composition containing a saccharide compound and a catalyst layer having a relatively low water content.

According to still another aspect of the present disclosure, it is possible to provide a fuel cell including the membrane-electrode assembly.

In addition to the above effects, specific effects of the present disclosure will be described together while describing specific details for carrying out the present disclosure.

**[BRIEF DESCRIPTION OF THE DRAWING]**

FIG. 1 shows a cross-sectional view illustrating a membrane-electrode assembly according to an embodiment of the present disclosure.

FIG. 2 shows a schematic diagram illustrating a fuel cell according to an embodiment of the present disclosure.

**[BEST MODE]**

Hereinafter, each configuration of the present disclosure will be described in more detail so that those skilled in the art can easily practice the same, but these are merely exemplary embodiments and the scope of rights of the present disclosure is not limited.

In an embodiment, the present disclosure provides an ion conductor composition which includes 100 parts by weight of an ion conductor; and 0.05 to 10 parts by weight of a saccharide compound based on 100 parts by weight of the ion conductor. According to an aspect of the present disclosure, it is possible to improve ion conductivity performance by increasing the activity of a polymer electrolyte membrane by maintaining a water content in the polymer electrolyte membrane, through an ion conductor composition containing a saccharide compound having a functional group capable of interacting with water (or hydrogen bonding), under a low humidity or high temperature condition. According to another aspect of the present disclosure, it is possible to minimize a problem caused by a difference in interface (difference in swelling degree) of a catalyst layer having a relatively low water content.

Hereinafter, the configuration of the present disclosure will be described in more detail.

The ion conductor according to the present disclosure may correspond to one selected from the group consisting of a fluorine-based ion conductor, a hydrocarbon-based ion conductor, and a combination thereof, and may preferably be a hydrocarbon-based ion conductor. When the hydrocarbon-based ion conductor and the saccharide compound are combined, the ion conductivity can be further increased compared to the combination of the fluorine-based ion conductor and the saccharide compound, and the dimensional stability can be improved by lowering the dimensional change rate of the polymer electrolyte membrane, and the water content can be increased to an appropriate level under a low humidity condition. Additionally, due to the structural similarity between the hydrocarbon-based ion conductor and the saccharide compound, their compatibility is high, and the effect of the saccharide can more easily be implemented. The ion conductor may be a cation conductor having a cation (e.g., hydrogen ion) exchange functional group or an anion conductor having an anion (e.g., hydroxy ion) exchange functional group. The cation exchange functional group may be any one selected from the group consisting of a sulfonic acid group, a carboxyl group, a boronic acid group, a phosphoric acid group, an imide group, a sulfonimide group, a sulfonamide group, a sulfonic acid fluoride group, and a combination thereof, and may generally be a sulfonic acid group or carboxyl group. For example, the fluorine-based ion conductor may correspond to perfluorosulfonic acid (PFSA).

The cation conductor includes the cation exchange functional group and may include a fluorine-based polymer containing fluorine in the main chain; hydrocarbon-based polymers (e.g., benzimidazole, polyamide, polyamideimide, polyimide, polyacetal, polyethylene, polypropylene, acrylic resin, polyester, poly sulfone, polyether, polyetherimide, polyester, polyethersulfone, polyetherimide, polycarbonate, polystyrene, polyphenylenesulfide, polyetheretherketone, polyetherketone, polyarylethersulfone, polyphosphazene, polyquinoxaline, *etc.*); partially fluorinated polymers (*e.g.,* polystyrene-graft-ethylenetetrafluoroethylene copolymers, polystyrene-graft-polytetrafluoroethylene copolymers, etc.); sulfone imides; a mixture thereof; *etc.*

More specifically, when the cation conductor is a hydrogen ion cation conductor, the polymers may include a cation exchange group selected from the group consisting of a sulfonic acid group, a carboxylic acid group, a phosphoric acid group, a phosphonic acid group, and a derivative thereof in their side chains, and specific examples may correspond to fluorine-based polymers which includes poly(perfluorosulfonic acid), poly(perfluorocarboxylic acid), a copolymer of tetrafluoroethylene containing a sulfonic acid group and fluorovinyl ether, defluorinated sulfurized polyether ketone, or a mixture thereof.

The anion conductor, which is a polymer capable of transporting anions (*e.g.*, hydroxy ions), is commercially available in the form of a hydroxide or halide (usually chloride), and the anion conductor and may be used for industrial water purification, metal separation, catalytic processes, *etc.*

Generally, metal hydroxide-doped polymers can be used as the anion conductor, and specifically, metal hydroxide-doped poly(ethersulfone), polystyrene, vinyl-based polymers, poly(vinyl chloride), and poly(vinylidene fluoride), poly(tetrafluoroethylene), poly(benzimidazole), poly(ethylene glycol), *etc.* may be used.

The hydrocarbon-based ion conductor may correspond to one selected from the group consisting of sulfonated polyimide (S-PI), sulfonated polyarylethersulfone (S-PAES), sulfonated polyetheretherketone (S-PEEK), sulfonated polybenzimidazole (S-PBI), sulfonated polysulfone (S-PSU), sulfonated polystyrene (S-PS), sulfonated polyphosphazene, sulfonated polyquinoxaline, sulfonated polyketone, sulfonated polyphenylene oxide, sulfonated polyether sulfone, sulfonated polyether ketone, sulfonated polyphenylene sulfone, sulfonated polyphenylene sulfide, sulfonated polyphenylene sulfide sulfone, sulfonated polyphenylene sulfide sulfone nitrile, sulfonated polyarylene ether, sulfonated polyarylene ether nitrile, sulfonated polyarylene ether ether nitrile, sulfonated polyarylene ether sulfone ketone, and a combination thereof. However, the technical idea of the present disclosure is not limited thereto.

The saccharide compound according to the present disclosure may be included in 0.05 to 10 parts by weight, preferably 0.5 to 2.0 parts by weight, and more preferably 0.5 to 1.0 parts by weight based on 100 parts by weight of the ion conductor. When the saccharide compound is less than the above numerical range, the hydrogen ion conductivity may be decreased due to insufficient water content of the polymer electrolyte membrane under a high temperature or low humidity operating condition, whereas when the saccharide compound exceeds the above numerical range, the difference in swelling degree between the catalyst layer and the polymer electrolyte membrane, which will be described later, may increase thereby causing an interface problem. The interface problem means that the dimensional stability of the polymer electrolyte membrane is reduced.

The saccharide compound according to the present disclosure may correspond to one selected from the group consisting of a monosaccharide, a disaccharide, a polysaccharide, and a combination thereof, and may specifically be a monosaccharide.

The monosaccharide may correspond to a compound represented by Formula 1 below.

$$[\text{Formula 1}] \qquad (CH_2O)_n$$

In Formula 1 above, n may correspond to 3 to 7, and preferably 4 to 6.

For example, the monosaccharide may correspond to one selected from the group consisting of aldotriose, ketotriose, aldotetrose, ketotetrose, ribose, deoxyribose, fructose, glucose, galactose, aldoheptose, ketoheptose, and a combination thereof.

For example, the disaccharide may correspond to one selected from the group consisting of sucrose, lactulose, lactose, trehalose, cellobiose, chitobiose, kojibiose, nigerose, isomaltose, beta-trehalose, alpha, beta-trehalose, sophorose, laminaribiose, gentiobiose, turanose, maltulose, isomaltulose, gentiobiulose, mannobiose, melibiose, melibiulose, rutinose, rutinulose, xylobiose, and a combination thereof.

For example, the polysaccharide may correspond to one selected from the group consisting of starch, glycogen, cellulose, chitin, arabinoxylan, pectin, dextrin, and a combination thereof.

The solubility of the saccharide compound may correspond to 0 g/L to 1,000 g/L, and preferably 150 g/L to 700 g/L based on water at 25°C. When the solubility of the saccharide compound in water is below the above numerical range, the saccharide compound may precipitate and act as resistance, whereas when the solubility of the saccharide compound exceeds the above numerical range, leakage from the polymer electrolyte membrane may occur during fuel cell operation.

The saccharide compound can maintain the water content in the polymer electrolyte membrane under a low humidity or high temperaturenon condition by including a functional group (hydroxy group) capable of interacting with water (or hydrogen bonding). Accordingly, the high water content of the polymer electrolyte membrane can increase the activity of the polymer electrolyte membrane under low humidity or high temperature conditions and improve ionic conductivity.

Another embodiment of the present disclosure may provide a polymer electrolyte membrane including the ion conductor composition.

The polymer electrolyte membrane may correspond to a single membrane, and the thickness of the single membrane may be, for example, 5 $\mu$m to 125 $\mu$m, and preferably 5 $\mu$m to 60 $\mu$m (micrometer). However, the technical concept of the present disclosure is not limited to the thickness of the polymer electrolyte membrane, and various thickness ranges may be applied.

The polymer electrolyte membrane (or reinforced composite membrane) according to another embodiment of the present disclosure may further include a porous support impregnated in the dispersion containing the ion conductor composition. Conventional reinforced composite membranes may have excellent mechanical durability compared to single membranes due to the introduction of a porous support, but have problems in that they have relatively low ionic conductivity due to resistance and have a low water content under high temperature and low humidity conditions. According to an embodiment of the present disclosure, by impregnating the porous support in the dispersion containing the ion conductor composition, not only can the ionic conductivity and water content be increased to an appropriate level, but also the dimensional stability can be improved.

The porous support may correspond to one selected from the group consisting of a fluorine-based porous support, a hydrocarbon-based porous support, and a combination thereof.

The fluorine-based porous support according to an embodiment of the present disclosure may include a highly fluorinated polymer having excellent resistance to thermal and chemical decomposition, and preferably a perfluorinated polymer, for example, polytetrafluoroethylene (PTFE) or tetrafluoroethylene and $CF_2=CFC_nF_{2n+1}$ (where n is a real number from 1 to 5) or $CF_2=CFO-(CF_2CF(CF_3)O)_mC_nF_{2n+1}$ (m is a real number from 0 to 15, n is a real number from 1 to 15).

The fluorine-based porous support according to another embodiment of the present disclosure may correspond to expanded polytetrafluoroethylene (e-PTFE) having a microstructure of polymer fibrils or a microstructure in which nodes are connected to one another by fibrils. Additionally, a film having a fine structure of polymeric fibrils without the nodes may also be used as the porous support.

A fluorine-based porous support according to another embodiment of the present disclosure may include a perfluorinated polymer. The fluorine-based porous support may correspond to a more porous and stronger porous support by extrusion molding of dispersion polymerization PTFE into a tape in the presence of a lubricant and stretching the thus-obtained material.

Additionally, the non-crystalline content of the PTFE may be increased by heat-treating the e-PTFE at a temperature exceeding the melting point of the PTFE (about 342°C). The e-PTFE film prepared by the above method may have micropores having various diameters and porosity. The e-PTFE film prepared by the above method may have pores of at least 35%, and the micropores may have a diameter of about 0.01 $\mu$m to about 1 $\mu$m.

The nanoweb support according to an embodiment of the present disclosure may be a non-woven fibrous web consisting of a plurality of randomly oriented fibers. The non-woven fibrous web refers to a sheet which has a structure of individual fibers or filaments that are interlaid, but not in the same way as in a woven fabric. The non-woven fibrous web may be prepared by any one method selected from the group consisting of is carding, gameting, air-laying, wet-laying, melt blowing, spun bonding, and stitch bonding.

The fiber may include one or more polymer materials, and generally, any fiber-forming polymer material may be used as long as it is used as such, and specifically, a hydrocarbon-based fiber-forming polymer material may be used. For example, the fiber-forming polymer material may include any one selected from the group consisting of polyolefins (e.g., polybutylene, polypropylene, and polyethylene), polyesters (e.g., polyethylene terephthalate and polybutylene terephthalate), polyamides (nylon-6 and nylon-6,6), polyurethane polybutene, polylactic acid, polyvinyl alcohol, polyphenylene sulfide, polysulfone, fluid crystalline polymers, polyethylene-co-vinylacetate, polyacrylonitrile, cyclic polyolefins, polyoxymethylene, polyolefin-based thermoplastic elastomers, and a combination thereof. However, the technical idea of the present disclosure is not limited thereto.

The hydrocarbon-based porous support according to an embodiment of the present disclosure may include a nanoweb, in which nanofibers are integrated in the form of a non-woven fabric including a plurality of pores.

As the nanofiber, a hydrocarbon-based polymer which exhibits excellent chemical resistance and has hydrophobicity, and thus are not subject to shape deformation by moisture in a high-humidity environment, may preferably be used. Specifically, as the hydrocarbon-based polymer, any one selected from the group consisting of nylon, polyimide, polyaramid, polyetherimide, polyacrylonitrile, polyaniline, polyethylene oxide, polyethylene naphthalate, polybutylene terephthalate, styrene butadiene rubber, polystyrene, polyvinyl chloride, polyvinyl alcohol, polyvinylidene fluoride, polyvinyl butylene, polyurethane, polybenzoxazole, polybenzimidazole, polyamideimide, polyethylene terephthalate, polyphenylene sulfide, polyethylene, polypropylene, a copolymer thereof, and a mixture thereof, and among these, polyimide having more excellent heat resistance, chemical resistance, and shape stability may preferably be used.

The nanoweb is an aggregate of nanofibers in which nanofibers prepared by electrospinning are randomly arranged. In particular, considering the porosity and thickness of the nanoweb, the nanofibers measured for 50 fiber diameters using a scanning electron microscope (JSM6700F, JEOL) and calculated from the average, it is desirable to have a diameter with an average of 40 nm to 5,000 nm.

When the average diameter of the nanofibers is below the above numerical range, the mechanical strength of the porous support may be reduced, whereas when the average diameter of the nanofibers exceeds the above numerical range, the porosity may be significantly decreased and the thickness may be increased.

The thickness of the non-woven fibrous web may be 10 $\mu$m to 50 $\mu$m, and specifically 15 $\mu$m to 43 $\mu$m. When the thickness of the non-woven fibrous web is below the above numerical range, the mechanical strength may decrease, whereas when the thickness exceeds the above numerical range, resistance loss may increase, and weight reduction and integration may decrease.

The non-woven fibrous web may have a basic weight of 5 mg/cm$^2$ to 30 mg/cm$^2$. When the basis weight of the non-woven fibrous web is below the above range, visible pores are formed, making it difficult to function as a porous support, whereas when the basis weight of the non-woven fibrous web exceeds the above numerical range, it may be prepared in the form of a paper or fabric in which pores are hardly formed.

The porosity may be calculated by the ratio of the air volume in the porous support to the total volume of the porous support according to Equation 1 below. In particular, the total volume may be calculated by preparing a rectangular sample and measuring its width, length, and thickness, and the air volume may be obtained by measuring the mass of the sample and subtracting the polymer volume calculated from the density from the total volume.

[Equation 1]

$$\text{Porosity (\%)} = (\text{air volume in porous support/total volume of porous support}) \times 100$$

The porous support according to the present disclosure may have a porosity of 30 % to 90%, and preferably 50% to 85%. When the porosity of the porous support is below the above numerical range, impregnation property of the ion conductor may deteriorate, whereas when the porosity of the porous support exceeds the above numerical range, shape stability may deteriorate, and thus, subsequent processes may not proceed smoothly.

Another embodiment of the present disclosure may provide a membrane-electrode assembly which includes the polymer electrolyte membrane and a catalyst layer disposed on at least one surface of the polymer electrolyte membrane.

Hereinafter, the configuration of the present disclosure will be described in detail with reference to the drawings.

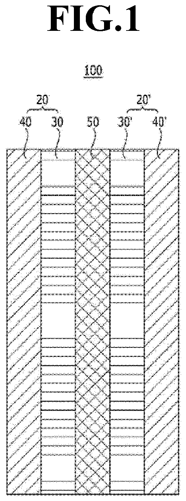

FIG. 1 shows a cross-sectional view illustrating a membrane-electrode assembly according to an embodiment of the present disclosure.

Referring to FIG. 1, the membrane-electrode assembly 100 according to the present disclosure includes the polymer electrolyte membrane 50 and the fuel cell electrodes (20, 20') disposed on both sides of the polymer electrolyte membrane 50, respectively.

The electrodes (20, 20') include electrode substrates (40, 40') and the catalyst layers (30, 30') formed on surfaces of the electrode substrates (40, 40'), and the electrode substrates (40, 40') and may further include a microporous layer (not shown) containing conductive fine particles (e.g., carbon powder, carbon black, etc.) so as to facilitate diffusion of materials between the catalyst layers (30, 30') and the electrode substrates (40, 40').

In the membrane-electrode assembly 100, the electrode 20, which is disposed on one surface of the polymer electrolyte membrane 50 and causes an oxidation reaction that generates hydrogen ions and electrons from the fuel delivered to the catalyst layer 30 through the electrode substrate 40, is called an anode electrode.

The electrode 20', which is disposed on the other side of the polymer electrolyte membrane 50 and causes a reduction reaction that generates water from hydrogen ions supplied through the polymer electrolyte membrane 50 and the oxidizing agent delivered to the catalyst layer 30' through the electrode substrate 40', is called a cathode electrode.

The catalyst layers (30, 30') of the anode and cathode electrodes (20, 20') include a catalyst. As the catalyst, any catalyst that participates in the reaction of a battery and can be used as a catalyst for a fuel cell may be used. Preferably, a platinum-based metal may be used.

The platinum-based metal may include any one selected from the group consisting of platinum (Pt), palladium (Pd), ruthenium (Ru), iridium (Ir), osmium (Os), a platinum-M alloy, a non-platinum alloy, and a combination thereof, and more preferably, a combination of two or more metals selected from the platinum-based catalytic metal group may be used, but is not limited thereto, and any platinum-based catalytic metal that can be used in the art may be used without limitation.

The M may correspond to at least one selected from the group consisting of palladium (Pd), ruthenium (Ru), iridium (Ir), osmium (Os), gallium (Ga), titanium (Ti), vanadium (V), chromium (Cr), manganese (Mn), iron (Fe), cobalt (Co), nickel (Ni), copper (Cu), silver (Ag), gold (Au), zinc (Zn), tin (Sn), molybdenum (Mo), tungsten (W), lanthanum (La), and rhodium (Rh). Specifically, as the platinum alloy, two or more selected from the group consisting of Pt-Pd, Pt-Sn, Pt-Mo, Pt-Cr, Pt-W, Pt-Ru, Pt-Ru-W, Pt-Ru-Mo, Pt-Ru-Rh-Ni, Pt-Ru-Sn-W, Pt-Co, Pt-Co-Ni, Pt-Co-Fe, Pt-Co-Ir, Pt-Co-S, Pt-Co-P, Pt-Fe, Pt-Fe-Ir, Pt-Fe-S, Pt-Fe-P, Pt-Au-Co, Pt-Au-Fe, Pt-Au-Ni, Pt-Ni, Pt-Ni-Ir, Pt-Cr, Pt-Cr-Ir, and a combination thereof may be used alone or in combination.

Additionally, as the non-platinum alloy, one or a mixture of two or more selected from the group consisting of Ir-Fe, Ir-Ru, Ir-Os, Co-Fe, Co-Ru, Co-Os, Rh-Fe, Rh-Ru, Rh-Os, Ir-Ru-Fe, Ir-Ru-Os, Rh-Ru-Fe, Rh-Ru-Os and a combination thereof may be used.

As the catalyst itself, the catalyst itself (black) may be used or it may be used by supporting the same into a carrier.

According to the present disclosure, it is possible to provide a membrane-electrode assembly which improves the ionic conductivity of a polymer electrolyte membrane while minimizing the problem caused by an interface difference (difference in swelling degree) between the polymer electrolyte membrane made of an ion conductor composition containing a saccharide compound and a catalyst layer having a relatively low water content.

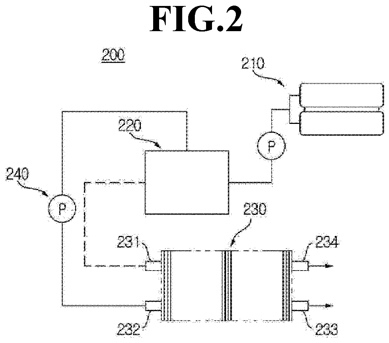

FIG. 2 shows a schematic diagram illustrating a fuel cell according to an embodiment of the present disclosure.

In an embodiment of the present disclosure, it is possible to provide a fuel cell including the membrane-electrode assembly.

Referring to FIG. 2, the fuel cell 200 according to the present disclosure may include a fuel supply unit 210, which supplies a mixed fuel in which fuel and water are mixed; a reforming unit 220, which reforms the mixed fuel to generate reformed gas containing hydrogen gas; a stack 230, in which the reformed gas containing hydrogen gas supplied from the reforming unit 220 causes an electrochemical reaction with an oxidizing agent to generate electrical energy; and an oxidizing agent supply unit 240, which transfers the oxidizing agent to the reforming unit 220 and the stack 230.

The stack 230 may be equipped with a plurality of unit cells which generate electrical energy by inducing an oxidation/reduction reaction between a reformed gas including hydrogen supplied from the reforming unit 220 and the oxidizing agent supplied from the oxidizing agent supplying unit 240.

Each unit cell, which refers to a unit cell that generates electricity, may include the membrane-electrode assembly for oxidizing/reducing the reformed gas containing hydrogen gas and oxygen in the oxidizing agent, and a separator (also called a bipolar plate, hereinafter referred to as "separator") for supplying a reformed gas containing hydrogen gas and the oxidizing agent to the membrane-electrode assembly. The separators are disposed on both sides of the membrane-electrode assembly with the membrane-electrode assembly placed at the center. In particular, the separators respectively located at the outermost side of the stack are also particularly called end plates.

Among the separators, the end plate may be equipped with a pipe-shaped first supply pipe 231 for injecting the reformed gas including hydrogen gas supplied from the reforming unit 220; and a pipe-shaped second supply pipe 232 for injecting oxygen gas; and the other end plate may be equipped with a first discharge pipe 233 for discharging reformed gas containing hydrogen gas, that is finally unreacted and remains in a plurality of unit cells, to the outside; and a second discharge pipe 234 for discharging the oxidizing agent, that is finally unreacted and remains in the unit cell, to the outside.

In the fuel cell, since the separator, the fuel supply unit, and the oxidizing agent supply unit constituting the electricity generation unit are used in a conventional fuel cell, a detailed description thereof will be omitted herein.

Hereinafter, embodiments of the present disclosure will be described in detail so that those skilled in the art can easily practice the same, but these are merely exemplary embodiments, and the scope of rights of the present disclosure is not limited thereto.

**[Preparation Example: Preparation of Polymer Electrolyte Membrane Containing Ion Conductor Composition]**

Polymer electrolyte membrane including the ion conductor according to Examples and Comparative Examples were prepared according to the compositions shown in Table 1 below. The polymer electrolyte membranes were prepared by a conventional method for preparing a polymer electrolyte membrane.

**<Comparative Example 1-1>**

A polyelectrolyte membrane in the form of a single membrane was prepared by casting a Nafion dispersion (D2020; Dupont, 20 wt% Nafion) on a glass plate with a doctor blade.

**<Comparative Example 1-2>**

After adding 0.01 part by weight of glucose to the Nafion dispersion (D2020; Dupont, 20 wt% Nafion,) based on 100 parts by weight of the Nafion dispersion, the Nafion dispersion to which the glucose was added was stirred at room temperature for 3 hours. The stirred Nafion dispersion was cast on a glass substrate with a doctor blade to prepare a polymer electrolyte membrane in the form of a single membrane.

**<Comparative Example 1-3>**

After adding 11 parts by weight of glucose to the Nafion dispersion (D2020; Dupont, 20 wt% Nafion) based on 100 parts by weight of the Nafion dispersion, the Nafion dispersion to which the glucose was added was stirred at room temperature for 3 hours. The stirred Nafion dispersion was cast on a glass substrate with a doctor blade to prepare a polymer electrolyte membrane in the form of a single membrane.

**<Comparative Example 2-1>**

A dispersion prepared by dissolving sulfonated polyarylene ether sulfone (S-PAES) having an IEC (Ion Exchange Capacity) of 1.3 meq/g in dimethylacetamide (DMAc) was cast on a glass plate with a doctor blade to form a single polymer electrolyte membrane in the form of a membrane.

**<Comparative Example 3-1>**

Nafion dispersion (D2020; Dupont, 20 wt% Nafion) was impregnated in poly-terafluoroethylene (PTFE; 80% porosity, pore size of 0.45 $\mu$m, thickness of 15 $\mu$m) for 1 hour, and dried to prepare a polymer electrolyte membrane (or reinforced composite membrane).

**<Example 1-1>**

After adding 0.1 parts by weight of glucose to the Nafion dispersion (D2020; Dupont, 20 wt% Nafion) based on 100 parts by weight of the Nafion dispersion, the Nafion dispersion to which the glucose was added was stirred at room temperature for 3 hours. The stirred Nafion dispersion was cast on a glass substrate with a doctor blade to prepare a polymer electrolyte membrane in the form of a single membrane.

**<Example 1-2>**

After adding 0.5 parts by weight of glucose to the Nafion dispersion (D2020; Dupont, 20 wt% Nafion) based on 100 parts by weight of the Nafion dispersion, the Nafion dispersion to which the glucose was added was stirred at room temperature for 3 hours. The stirred Nafion dispersion was cast on a glass substrate with a doctor blade to prepare a polymer electrolyte membrane in the form of a single membrane.

**<Example 1-3>**

After adding 1.0 part by weight of glucose to the Nafion dispersion (D2020; Dupont, 20 wt% Nafion) based on 100 parts by weight of the Nafion dispersion, the Nafion dispersion to which the glucose was added was stirred at room temperature for 3 hours. The stirred Nafion dispersion was cast on a glass substrate with a doctor blade to prepare a polymer electrolyte membrane in the form of a single membrane.

**<Example 1-4>**

After adding 0.5 parts by weight of sucrose to the Nafion dispersion (D2020; Dupont, 20 wt% Nafion) based on 100 parts by weight of the Nafion dispersion, the Nafion dispersion to which the sucrose was added was stirred at room temperature for 3 hours. The stirred Nafion dispersion was cast on a glass substrate with a doctor blade to prepare a polymer electrolyte membrane in the form of a single membrane.

**<Example 1-5>**

After adding 0.5 parts by weight of maltose to 100 parts by weight of the Nafion dispersion (D2020; Dupont, 20 wt% Nafion), the Nafion dispersion to which the maltose was added was stirred at room temperature for 3 hours. The stirred Nafion dispersion was cast on a glass substrate with a doctor blade to prepare a polymer electrolyte membrane in the form of a single membrane.

**<Example 1-6>**

After adding 0.5 parts by weight of starch to the Nafion dispersion (D2020; Dupont, 20 wt% Nafion) based on 100 parts by weight of the Nafion dispersion, the Nafion dispersion to which the starch was added was stirred at room temperature for 24 hours. The stirred Nafion dispersion was cast on a glass substrate with a doctor blade to prepare a polymer electrolyte membrane in the form of a single membrane.

**<Example 2-1>**

After adding 1.0 part by weight of glucose to a sulfonated polyarylene ether sulfone (S-PAES) dispersion prepared by dissolving S-PAES having an ion exchange capacity (IEC) of 1.3 meq/g in dimethylacetamide (DMAc) based on 100 parts by weight of the S-PAES dispersion, the S-PAES dispersion to which the glucose was added was stirred at room temperature for 3 hours. The stirred S-PAES dispersion was cast on a glass plate with a doctor blade to prepare a polymer electrolyte membrane in the form of a single membrane.

**<Example 2-2>**

After adding 0.5 parts by weight of sucrose to a sulfonated polyarylene ether sulfone (S-PAES) dispersion prepared by dissolving S-PAES having an ion exchange capacity (IEC) of 1.3 meq/g in dimethylacetamide (DMAc) based on 100 parts by weight of the S-PAES dispersion, the S-PAES dispersion to which the sucrose was added was stirred at room temperature for 3 hours. The stirred S-PAES dispersion was cast on a glass plate with a doctor blade to prepare a polymer electrolyte membrane in the form of a single membrane.

**<Example 2-3>**

After adding 0.5 parts by weight of maltose to a sulfonated polyarylene ether sulfone (S-PAES) dispersion prepared by dissolving S-PAES having an ion exchange capacity (IEC) of 1.3 meq/g in dimethylacetamide (DMAc) based on 100 parts by weight of the S-PAES dispersion, the S-PAES dispersion to which the maltose was added was stirred at room temperature for 3 hours. The stirred S-PAES dispersion was cast on a glass plate with a doctor blade to prepare a polymer electrolyte membrane in the form of a single membrane.

**<Example 2-4>**

After adding 0.5 parts by weight of starch to a sulfonated polyarylene ether sulfone (S-PAES) dispersion prepared by dissolving S-PAES having an ion exchange capacity (IEC) of 1.3 meq/g in dimethylacetamide (DMAc) based on 100 parts by weight of the S-PAES dispersion, the S-PAES dispersion to which the starch was added was stirred at room temperature for 6 hours. The stirred S-PAES dispersion was cast on a glass plate with a doctor blade to prepare a polymer electrolyte membrane in the form of a single membrane.

**<Example 3-1>**

After adding 1.0 part by weight of glucose to a sulfonated polyarylene ether sulfone (S-PAES) dispersion prepared by dissolving S-PAES having an ion exchange capacity (IEC) of 1.3 meq/g in dimethylacetamide (DMAc) based on 100 parts by weight of the S-PAES dispersion, the S-PAES dispersion to which the glucose was added was stirred at room temperature for 3 hours. The stirred Nafion dispersion was impregnated in poly-terafluoroethylene (PTFE; 80% porosity, pore size of 0.45 $\mu$m, thickness of 15 $\mu$m) for 1 hour, and dried to prepare a polymer electrolyte membrane (or reinforced composite membrane).

**[Table 1]**

| Unit: parts by weight | First Ion Conductor Compositio n[1] | Second Ion Conductor Compositio n[2] | Glucose | Sucrose | Maltose | Starch | Remarks |
|---|---|---|---|---|---|---|---|
| Comparat ive Example 1-1 | 100 | - | - | - | - | - | - |
| Comparat ive Example 1-2 | 100 | - | 0.01 | - | - | - | - |
| Comparat ive Example 1-3 | 100 | - | 11 | - | - | - | - |
| Comparat ive Example 2-1 | - | 100 | - | - | - | - | - |
| Comparat ive Example 3-1 | 100 | | | | | | Porous support[3] |
| Example 1-1 | 100 | - | 0.1 | - | - | - | - |
| Example 1-2 | 100 | - | 0.5 | - | - | - | - |
| Example 1-3 | 100 | - | 1.0 | - | - | - | - |
| Example 1-4 | 100 | - | - | 0.5 | - | - | - |
| Example 1-5 | 100 | - | - | - | 0.5 | - | - |
| Example 1-6 | 100 | - | - | - | - | 0.5 | - |
| Example 2-1 | - | 100 | 1.0 | - | - | - | - |
| Example 2-2 | - | 100 | - | 0.5 | - | - | - |
| Example 2-3 | - | 100 | - | | 0.5 | - | - |

(continued)

| Unit: parts by weight | First Ion Conductor Compositio n[1] | Second Ion Conductor Compositio n[2] | Glucose | Sucrose | Maltose | Starch | Remarks |
|---|---|---|---|---|---|---|---|
| Example 2-4 | - | 100 | - | - | - | 0.5 | - |
| Example 3-1 | 100 | - | 1.0 | - | - | - | Porous support[3] |

1) 20 wt% Nafion dispersion (D2020, Dupont, USA)

2) A dispersion obtained by dissolving sulfonated poly(arylene ether sulfone) (15 wt%) having an ion exchange capacity (IEC) of 1.3 meq/g in dimethylacetamide (DMAc)

3) Polytetrafluoroethylene (PTFE; 80% porosity, pore size of 0.45 $\mu$m, thickness of 15 $\mu$m)

**[Experimental Example: Experiment for Evaluation of Ion Conductivity, Water Content, and Dimensional Stability]**

For the polymer electrolyte membranes made of the ion conductor compositions prepared in Examples and Comparative Examples, ionic conductivity, water content, and dimensional stability were measured, and the results are shown in Table 2 below. The respective measurement methods are as follows.

**1) Ionic conductivity (high temperature/low humidity conditions; 80°C/50% RH)**

For the polymer electrolyte membranes according to the Comparative Examples and Examples, the ionic conductivity was measured at a measurement temperature of 80°C using a measuring device (Solatron-1280 Impedance/Gain-Phase analyzer). Specifically, after measuring the ohmic resistance or bulk resistance using a Four point probe AC impedance spectroscopic method, the ionic conductivity was calculated by the following [Equation 2].

[Equation 2]

$$\sigma = L/RS$$

In Equation 2, $\sigma$ corresponds to the ionic conductivity (S/cm), R corresponds to the ohmic resistance of the electrolyte membrane ($\Omega$), L corresponds to the distance between electrodes (cm), and S corresponds to the area in the electrolyte through which a constant current flows (cm$^2$).

**2) Water content**

The polymer electrolyte membranes according to Comparative Examples and Examples were washed several times with deionized water, and the washed polymer electrolyte membranes were dried in a vacuum dryer at 120°C for 24 hours, and then weighed ($W_{dry}$). Then, the same membrane was immersed in deionized water for 24 hours, taken out, water present on the surface was removed, and the weight was measured again ($W_{wet}$). The water absorption rate was calculated by Equation 3 below.

[Equation 3]

$$(water\ uptake,\ \%) = \frac{W_{wet} - W_{dry}}{W_{dry}} \times 100$$

**3) Low water content**

The polymer electrolyte membrane according to Comparative Examples and Examples was washed several times with deionized water, and the washed polymer electrolyte membrane was dried in a vacuum dryer at 120°C for 24 hours, and then weighed ($W_{dry}$). Subsequently, the same film was placed on a scale inside a chamber at 25°C and 50% relative humidity, left for 24 hours, and then weighed ($W_{wet}$). The water absorption rate was calculated by Equation 3 above.

**4) Dimensional stability**

The method for measuring the dimensional stability of the polymer electrolyte membrane according to the Comparative Examples and Examples was performed in the same manner as the water absorption rate measurement method, but instead of measuring the weight, the volume change in the polymer electrolyte membrane was measured, and then the dimensional stability (or dimensional change rate) was measured was calculated by Equation 4 below.

[Equation 4]

Dimensional change rate (%) =

(membrane area (wet) - membrane area (dry))/ membrane area (dry)) $\times$ 100

**[Table 2]**

| Sample | Ionic Conductivity (S/cm) | Water Content (%) | Low Water Content (%) | Dimensional Change Rate (%) | Ionic Conductor | Saccharide (Content) | Remarks |
|---|---|---|---|---|---|---|---|
| Comparative Example 1-1 | 0.020 | 20.3 | 7.03 | 42 | fluorine-based | - | |
| Comparative Example 1-2 | 0.022 | 20.4 | 7.51 | 42 | fluorine-based | glucose (0.01) | |
| Comparative Example 1-3 | 0.045 | 24.3 | 12.3 | 52 | fluorine-based | glucose (11) | |
| Comparative Example 2-1 | 0.043 | 20.4 | 8.57 | 32.3 | hydrocarbon-based | - | |
| Comparative Example 3-1 | 0.032 | 18.7 | 6.25 | 12 | fluorine-based | - | reinforced composite membrane |
| Example 1-1 | 0.028 | 20.6 | 8.00 | 42 | fluorine-based | glucose (0.1) | |
| Example 1-2 | 0.035 | 20.9 | 8.93 | 42 | fluorine-based | glucose (0.5) | |
| Example 1-3 | 0.040 | 22.1 | 10.0 | 48 | fluorine-based | glucose (1.0) | |
| Example 1-4 | 0.034 | 20.8 | 8.46 | 43 | Fluorine-based | Sucrose (0.5) | |
| Example 1-5 | 0.034 | 20.8 | 8.42 | 42 | Fluorine-based | Maltose (0.5) | |
| Example 1-6 | 0.032 | 20.6 | 8.14 | 43 | Fluorine-based | Starch (0.5) | |

(continued)

| Sample | Ionic Conductivity (S/cm) | Water Content (%) | Low Water Content (%) | Dimensional Change Rate (%) | Ionic Conductor | Saccharide (Content) | Remarks |
|---|---|---|---|---|---|---|---|
| Example 2-1 | 0.055 | 23.0 | 11.8 | 32 | Hydrocarbon-based | Glucose (1.0) | |
| Example 2-2 | 0.053 | 21.3 | 10.2 | 32 | Hydrocarbon-based | Sucrose (0.5) | |
| Example 2-3 | 0.053 | 21.2 | 9.79 | 32 | Hydrocarbon-based | Maltose (0.5) | |
| Example 2-4 | 0.050 | 21.0 | 9.66 | 32 | Hydrocarbon-based | Starch (0.5) | |
| Example 3-1 | 0.042 | 19.4 | 14.4 | 10.3 | Fluorine-based | Glucose (1.0) | Reinforced composite membrane |

**Claims**

1. An ion conductor composition comprising:

    100 parts by weight of an ion conductor; and
    0.05 to 10 parts by weight of a saccharide compound based on 100 parts by weight of the ion conductor.

2. The ion conductor composition of claim 1, wherein the saccharide compound is one selected from the group consisting of a monosaccharide, a disaccharide, a polysaccharide, and a combination thereof.

3. The ion conductor composition of claim 2, wherein the monosaccharide is a compound represented by Formula 1 below:

    [Formula 1]          $(CH_2O)_n$

    wherein in Formula 1 above, n is 3 to 7.

4. The ion conductor composition of claim 2, wherein the monosaccharide is one selected from the group consisting of aldotriose, ketotriose, aldotetrose, ketotetrose, ribose, deoxyribose, fructose, glucose, galactose, aldoheptose, ketoheptose, and a combination thereof.

5. The ion conductor composition of claim 2, wherein the disaccharide is one selected from the group consisting of sucrose, lactulose, lactose, trehalose, cellobiose, chitobiose, kojibiose, nigerose, isomaltose, beta-trehalose, alpha, beta-trehalose, sophorose, laminaribiose, gentiobiose, turanose, maltulose, isomaltulose, gentiobiulose, mannobiose, melibiose, melibiulose, rutinose, rutinulose, xylobiose, and a combination thereof.

6. The ion conductor composition of claim 2, wherein the polysaccharide is one selected from the group consisting of starch, glycogen, cellulose, chitin, arabinoxylan, pectin, dextrin, and a combination thereof.

7. The ion conductor composition of claim 1, wherein the ion conductor is one selected from the group consisting of a fluorine-based ion conductor, a hydrocarbon-based ion conductor, and a combination thereof.

8. The ion conductor composition of claim 7, wherein the hydrocarbon-based ion conductor is one selected from the group consisting of sulfonated polyimide (SPI), sulfonated polyarylethersulfone (S-PAES), sulfonated polyetheretherketone (SPEEK), sulfonated polybenzimidazole (SPBI), sulfonated polysulfone (S-PSU), sulfonated polystyrene (S-PS), sulfonated polyphosphazene, sulfonated polyquinoxaline, sulfonated polyketone, sulfonated polyphenylene oxide, sulfonated polyether sulfone, sulfonated polyether ketone, sulfonated polyphenylene sulfone, sulfonated polyphenylene sulfide, sulfonated polyphenylene sulfide sulfone, sulfonated polyphenylene sulfide sulfone nitrile, sulfonated polyarylene ether, sulfonated polyarylene ether nitrile, sulfonated polyarylene ether ether nitrile, sulfonated polyarylene ether sulfone ketone, and a combination thereof.

9. The ion conductor composition of claim 7, wherein the fluorine-based ion conductor is perfluorosulfonic acid (PFSA).

10. The ion conductor composition of claim 1, wherein the solubility of the saccharide compound is 0 g/L to 1,000 g/L based on water at 25°C.

11. A polymer electrolyte membrane comprising the ion conductor composition according to claim 1.

12. The polymer electrolyte membrane of claim 11, wherein the polymer electrolyte membrane further comprises a porous support which is impregnated in a dispersion comprising the ion conductor composition.

13. The polymer electrolyte membrane of claim 12, wherein the porous support is one selected from the group consisting of a fluorine-based porous support, a hydrocarbon-based porous support, and a combination thereof.

14. A membrane-electrode assembly comprising:

the polymer electrolyte membrane according to claim 11; and
a catalyst layer disposed on at least one surface of the polymer electrolyte membrane.

15. A fuel cell comprising the membrane-electrode assembly according to claim 14.

# FIG.1

# FIG.2

## INTERNATIONAL SEARCH REPORT

| | International application No. |
|---|---|
| | **PCT/KR2022/017136** |

**A. CLASSIFICATION OF SUBJECT MATTER**

**H01M 8/1048**(2016.01)i; **H01M 8/1039**(2016.01)i; **H01M 8/1058**(2016.01)i; **H01B 1/12**(2006.01)i; **H01M 8/1004**(2016.01)i; **H01M 8/10**(2006.01)i

According to International Patent Classification (IPC) or to both national classification and IPC

**B. FIELDS SEARCHED**

Minimum documentation searched (classification system followed by classification symbols)

H01M 8/1048(2016.01); H01M 4/86(2006.01); H01M 4/96(2006.01); H01M 8/02(2006.01); H01M 8/04(2006.01); H01M 8/1051(2016.01); H01M 8/1053(2016.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 이온전도체(ion conductor), 당류 화합물(saccharide compound), 포도당(glucose), 수크로스(sucrose), 녹말(starch), 퍼플루오로술폰산(perfluorosulfonic acid), 전해질막(electrolyte membrane), 다공성 지지체(porous substrate), 막-전극 어셈블리(membrane-electrode assembly), 연료전지(fuel cell)

**C. DOCUMENTS CONSIDERED TO BE RELEVANT**

| Category* | Citation of document, with indication, where appropriate, of the relevant passages | Relevant to claim No. |
|---|---|---|
| | JIANG, Gao-Peng et al. Bacterial nanocellulose/Nafion composite membranes for low temperature polymer electrolyte fuel cells. Journal of Power Sources. 30 September 2014 (online publication date), vol. 273, pp. 697-706. | |
| X | See abstract; page 698, right column, lines 21-52; page 699, right column, lines 33-57; page 703, right column, line 5 - page 704, left column, line 2 and page 704, right column, line 10 - page 705, right column, line 4; and figures 7 and 10. | 1,2,6,7,9-11,14,15 |
| Y | | 8,12,13 |
| A | | 3-5 |
| Y | KR 10-2020-0036139 A (KOLON INDUSTRIES, INC.) 07 April 2020 (2020-04-07) See paragraphs [0043], [0044], [0049]-[0053], [0060] and [0112]; and figure 1. | 8,12,13 |
| A | JP 06-188008 A (TOSHIBA CORP.) 08 July 1994 (1994-07-08) See paragraphs [0055]-[0060]. | 1-15 |

☑ Further documents are listed in the continuation of Box C.      ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **27 February 2023** | **27 February 2023** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| | International application No. |
|---|---|
| | **PCT/KR2022/017136** |

**C.** **DOCUMENTS CONSIDERED TO BE RELEVANT**

| Category* | Citation of document, with indication, where appropriate, of the relevant passages | Relevant to claim No. |
|---|---|---|
| A | JP 2003-331852 A (MATSUSHITA ELECTRIC IND. CO., LTD.) 21 November 2003 (2003-11-21) See paragraphs [0008] and [0009]. | 1-15 |
| A | ROSLI, Nur Adiera Hanna et al. Review of chitosan-based polymers as proton exchange membranes and roles of chitosan-supported ionic liquids. International Journal of Molecular Sciences. 17 January 2020 (publication date), vol. 21, article no. 632, inner pp. 1-52. See abstract; inner page 25, line 1 - inner page 26, line 9; and figures 8 and 9. | 1-15 |

Form PCT/ISA/210 (second sheet) (July 2022)

**INTERNATIONAL SEARCH REPORT**
Information on patent family members

International application No.

**PCT/KR2022/017136**

| Patent document cited in search report | | | Publication date (day/month/year) | Patent family member(s) | | | Publication date (day/month/year) |
|---|---|---|---|---|---|---|---|
| KR | 10-2020-0036139 | A | 07 April 2020 | KR | 10-2264516 | B1 | 14 June 2021 |
| JP | 06-188008 | A | 08 July 1994 | US | 5364711 | A | 15 November 1994 |
| | | | | US | 5432023 | A | 11 July 1995 |
| JP | 2003-331852 | A | 21 November 2003 | None | | | |

Form PCT/ISA/210 (patent family annex) (July 2022)